# EUROPEAN PATENT SPECIFICATION

(11) **EP 1 982 879 B1**
(45) Date of publication and mention of the grant of the patent: **09.06.2010**
(21) Application number: 07007904.1
(22) Date of filing: 18.04.2007
(51) Int. Cl.: B60R 25/10

(54) **Wireless horn relay type car antitheft system**
Drahtloses Hupenrelais- Fahrzeugdiebstahlschutzsystem
Système antivol pour voiture à relais de commande de l'avertisseur sans fil

(43) Date of publication of application: 22.10.2008
(73) Proprietor: Chen, Tse-Hsing, Chung-Ho City T'ai pei Hsien (TW)
(72) Inventor: Chen, Tse-Hsing, Chung-Ho City T'ai pei Hsien (TW)
(74) Representative: Kilian, Helmut

(56) References cited:
- JP-A- 2006 199 254
- US-A- 5 469 151
- US-B1- 6 963 272

## Description

### FIELD OF THE INVENTION

The present invention relates to a car antitheft system, and more particularly to a wireless horn relay type car antitheft system that is associated with an original horn relay to effectively hide from a thief while allows easy installation, and may drive an original horn to sound as an alarm.

### BACKGROUND OF THE INVENTION

A car is an indispensable traffic tool to most people in the modern society. To protect a car from being stolen, most car owners would install an antitheft device on the car. However, most conventional antitheft devices involve complicate wiring and therefore must be installed by a skilled worker instead of a general user. Such conventional antitheft devices are easily found out by a thief and become useless once they are destroyed.

For instance, a conventional electronic car antitheft device would generally be connected to an additionally mounted siren or an original car horn, so that the siren or the car horn produces warning sound when the antitheft device is triggered. To mount the additional siren in a car, it is necessary to extend a siren output line through a firewall to an engine room of the car to connect to the siren. At least one hole must be drilled on the engine room to fix the siren, and the drilling must be done by a skilled worker. When the antitheft device is directly connected to the original horn, it is still necessary to extend the horn output line through the firewall to the engine room to connect to the horn, or to find an original horn trigger switch by a skilled worker.

Moreover, for the purpose of successfully extending the horn output line, the original wiring hole on the firewall or the hole for an engine hood control line must be expanded, or holes must be drilled on the firewall. These works would increase the installation labor and time, and the expanded or the newly drilled hole would endanger the sealed firewall to admit waste gas or rainwater to the car.

It is therefore tried by the inventor to develop a wireless horn relay type car antitheft system to eliminate the drawbacks existed in the conventional car antitheft devices.

Document US 5 469 151 A discloses the preamble of claims 1 and 2.

### SUMMARY OF THE INVENTION

A primary object of the present invention is to provide a wireless horn relay type car antitheft system that is effectively hidden in an original horn relay, allows easy installation without the need of drilling and wiring in a car, and may drive an original horn to sound as an alarm.

To achieve the above and other objects, the wireless horn relay type car antitheft system of the present invention includes a horn relay housing internally provided with a power input and voltage regulator circuit, a radio transceiving circuit, a CPU decoding and controlling circuit, a horn relay driving circuit, a relay, and an antitheft sensor to detect any car theft behavior and drive an original horn to sound. The horn relay housing has input/output (I/O) terminals the same as those of an original horn relay; and a set of power cords including a positive power cord having a positive terminal in the form of a fuse plug for plugging into an original positive voltage fuse socket to obtain positive power supply, and for receiving an original fuse therein, and a negative power cord connected to a car body. The antitheft system also includes a wireless remote controller for remotely controlling the on and off of all circuits in the horn relay housing. The original horn may be driven by the antitheft system of the present invention to produce warning sound and therefore also functions like an alarm. The horn relay housing may be easily installed by directly mounting it into an original horn relay socket in the car without the need of drilling, wiring, and mounting additional siren in the car.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a block diagram of a wireless horn relay type car antitheft system according to a first embodiment of the present invention;
Fig. 2 is a block diagram of a wireless horn relay type car antitheft system according to a second embodiment of the present invention; and
Fig. 3 is a plan view of an embodiment of a wireless antitheft sensor used in the car antitheft system of the present invention.

### DETAILED DESCRIPTION OF THE PREFERRED EMBODIMENTS

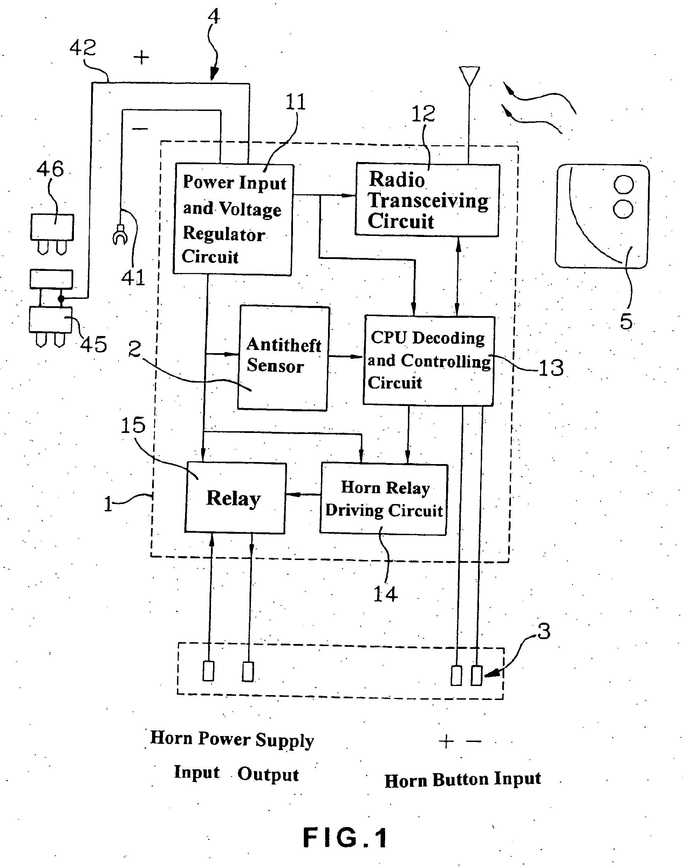

Please refer to Fig. 1 that is a block diagram of the wireless horn relay type car antitheft system according to a first embodiment of the present invention. As shown, the car antitheft system includes a horn relay housing 1, in which there are provided a power input and voltage regulator circuit 11 for supplying working power to all circuits of the car antitheft system; a radio transceiving circuit 12 for receiving a wireless signal and amplifying and converting the received signal to a digital signal; a central processing unit (CPU) decoding and controlling circuit 13 for decoding the digital signal and providing a control signal; a horn relay driving circuit 14 for amplifying the control signal to drive a relay 15, also provided in the housing 1, and thereby driving an original horn 8 to sound; and an antitheft sensor 2 electrically connected to the CPU decoding and controlling circuit 13 for detecting any theft behavior.

The horn relay housing 1 is designed to have the same size and appearance as an original horn relay, so as to prevent the horn relay housing 1 from being easily found out by a thief. The horn relay housing 1 also structurally includes a set of input/output (I/O) contacts 3, which have terminals the same as those provided on an original horn relay; and a set of power cords 4 having a positive terminal in the form of a fuse plug. A wireless remote controller 5 is externally provided for remotely controlling the on and off of the circuits inside the horn relay housing 1, or causing the horn to sound for locating the car or looking for help.

To manufacture the wireless horn relay type car antitheft system of the present invention, first mount the power input and voltage regulator circuit 11, the radio transceiving circuit 12, the CPU decoding and controlling circuit 13, the horn relay driving circuit 14, the relay 15, and the security sensor 2 into the horn relay housing 1, and then make the input/output contacts 3 identical to the original horn relay terminals. To install the present invention, a user needs only to remove the original horn relay from the relay socket in the car and plug the present invention in the original horn relay socket. The installation can be easily completed by a general user without the need of drilling, wiring or mounting additional sirens by a professional operator. The wireless horn relay type car antitheft system of the present invention is easy to install, effectively hidden to provide good antitheft effect, and may use the original horn 8 as a siren to produce warning sound.

It is known the horns on cars of different brands and versions might be differently triggered. For instance, some cars have horns that can be actuated only by turning an engine key to ON; some cars have horns that would cause non-supply of negative voltage in negative trigger; and some cars have horns that would cause non-supply of positive voltage in positive trigger. In response to these different ways of triggering the horns, the set of power cords 4 of the present invention includes a negative power cord 41 that is screwed to the car body, and a positive power cord 42 that has a fuse socket connector 45 connected to an end thereof for an original fuse 46 to plug thereinto. The fuse socket connector 45 is then plugged into an original positive voltage fuse socket. Thus, the present invention may be installed on a car of any type to obtain positive and negative power supply and keep the protection of original fuse 46.

With a car having the present invention installed thereon, a user may push a horn button 9 in an original steering wheel, so that a signal is produced at a horn button input to pass the CPU decoding and controlling circuit 13, the horn relay driving circuit 14, and the relay 15 to drive an original horn 8 to sound. That is, the function of the original horn 8 is maintained. The power input and voltage regulator circuit 11 functions to stabilize power voltage, so as to provide working power needed by all circuits of the present invention. The radio transceiving circuit 12 amplifies the signal received by an antenna thereof, and converts the received signal into a digital signal, which is sent to the CPU decoding and controlling circuit 13 and decoded. When the decoded signal is found correct, a control signal is sent out according to the coded signal. The control signal is amplified by the horn relay driving circuit 14 to drive the relay 15 to work, so that the original horn 8 is driven to produce sound and could therefore be used as an antitheft alarm or siren.

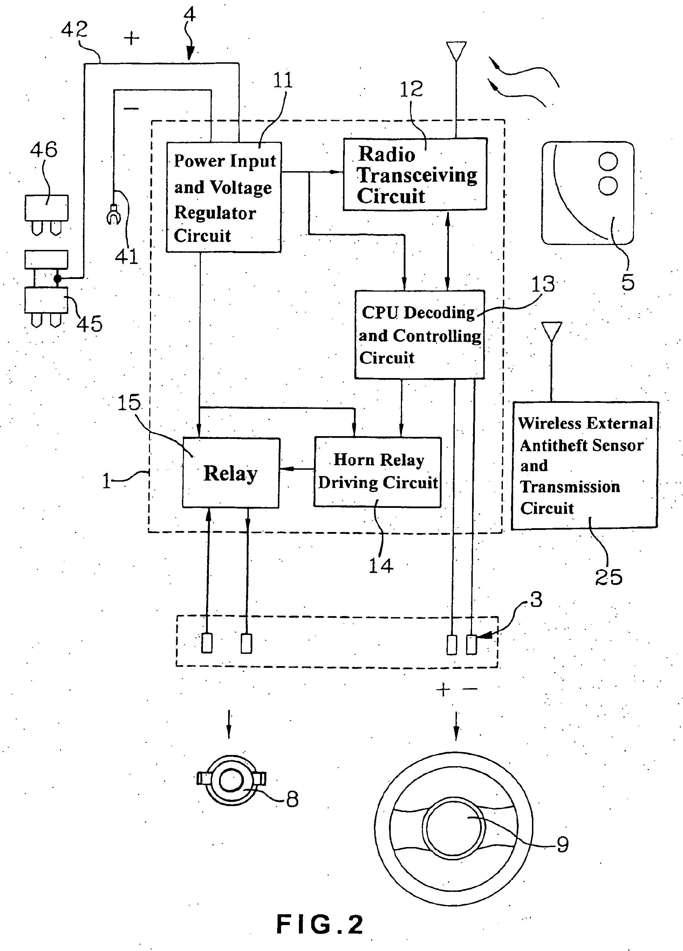

Please refer to Fig. 2 that is a block diagram of a wireless horn relay type car antitheft system according to a second embodiment of the present invention. In the second embodiment, the built-in antitheft sensor 2 is omitted, and an additional wireless antitheft sensor 25 is provided. Alternatively, the present invention may include both the built-in antitheft sensor 2 and the additional wireless antitheft sensor 25, so as to provide increased detecting points for better antitheft effect.

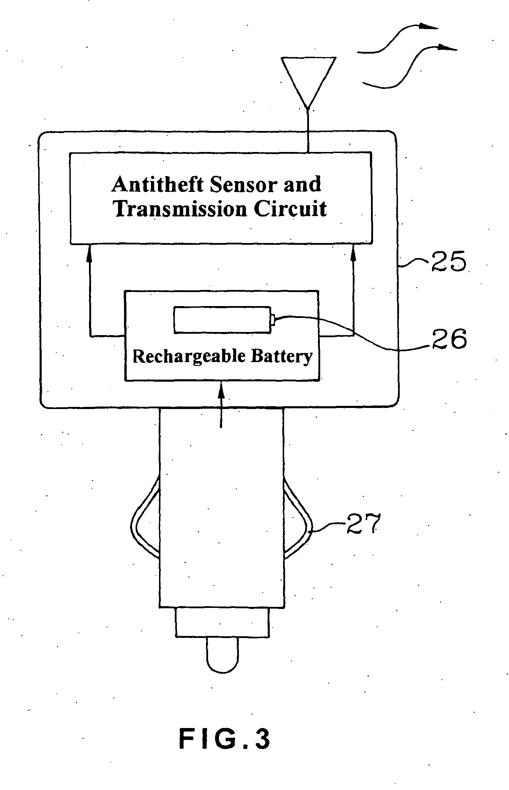

The wireless antitheft sensor 25 may internally consist of different types of antitheft sensor and transmission circuit. It is possible for the wireless antitheft sensor 25 to expose only two power cords, so as to reduce required wiring and simplify the installation thereof. Fig. 3 shows an embodiment of the wireless antitheft sensor 25 included in the present invention. In this embodiment, the wireless antitheft sensor 25 includes a built-in rechargeable battery 26, to which a cigarette lighter terminal 27 is connected for plugging into an original cigarette lighter socket, making the wireless antitheft sensor 25 more convenient for use and effectively hidden.

The present invention has been described with some preferred embodiments thereof and it is understood that many changes and modifications in the described embodiments can be carried out without departing from the scope of the invention that is intended to be limited only by the appended claims.

## Claims

1. A wireless horn relay type car antitheft system, comprising:
a horn relay housing (1) being internally provided with a power input and voltage regulator circuit (11) for providing working power to all circuits in said horn relay housing (1); a radio transceiving circuit (12) for receiving a wireless signal, and amplifying and converting the received signal into a digital signal; a CPU (13) decoding and controlling circuit for decoding said digital signal and providing a control signal;
a set of power cords (4), of which a positive terminal is in the form of a fuse plug (45); and
a wireless remote controller (5) for remotely controlling the on and off of all said circuits in said horn relay housing;
the car antitheft system is **characterised in that** it further comprises a horn relay driving circuit (14) for amplifying said control signal to drive a relay, which is also provided in said horn relay housing (1), so that said relay is actuated to drive the original horn to sound; an antitheft sensor (2) electrically connected to said CPU decoding and controlling circuit for detecting any theft behavior;
and a set of input/output (I/O) contacts (3) having terminals the same as those provided on an original horn relay.

2. A wireless horn relay type car antitheft system, comprising:
a horn relay housing (1) being internally provided with a power input and voltage regulator circuit (11) for providing working power to all circuits in said horn relay housing; a radio transceiving circuit (12) for receiving a wireless signal, and amplifying and converting the received signal into a digital signal; a CPU (13) decoding and controlling circuit for decoding said digital signal and providing a control signal; a horn relay driving circuit (14) for amplifying said control signal to drive a relay, which is also provided in said horn relay housing (1), so that said relay is actuated to drive the original horn to sound; and
a wireless antitheft sensor (25) externally wirelessly connected to said horn relay housing (1), and being internally provided with an antitheft sensor (25) and a transmission circuit for detecting any theft behavior;
a set of power cords, of which a positive terminal is in the form of a fuse plug; and
a wireless remote controller (5) for remotely controlling the on and off of all said circuits in said horn relay housing;
the car antitheft system is **characterised in that** it further comprises a horn relay driving circuit (14) for amplifying said control signal to drive a relay, which is also provided in said horn relay housing (1), so that said relay is actuated to drive the original horn to sound; an antitheft sensor (2) electrically connected to said CPU decoding and controlling circuit for detecting any theft behavior;
and a set of input/output (I/O) contacts (3) having terminals the same as those provided on an original horn relay,
a set of input/output (I/O) contacts having terminals the same as those provided on an original horn relay.

3. The wireless horn relay type car antitheft system as claimed in claim 1 or 2, wherein said horn relay housing has (1) a size identical to that of the original horn relay (15) and sometimes as original horn relay; and wherein said set of power cords includes a negative power cord (41) that is screwed to car body, and a positive power cord (42) that has a fuse socket connector connected thereto, and said fuse socket connector being adapted to plug into an original positive voltage fuse socket and receive a fuse therein.

4. The wireless horn relay type car antitheft system as claimed in claim 2, wherein said external wireless antitheft sensor includes a built-in rechargeable battery (26), and a cigarette lighter terminal (27) connected to said rechargeable battery (26) and adapted to plug into an original cigarette lighter socket to charge said rechargeable battery (26).

5. The wireless horn relay type car antitheft system as claimed in claim 2, wherein said external wireless antitheft sensor (25) is provided with a set of power cords for connecting to a power supply on a car.

6. The wireless horn relay type car antitheft system as claimed in claim 1 or 2, wherein said antitheft system may serve as a wireless horn driver of another antitheft device to receive an antitheft trigger signal from said other antitheft device and thereby drives an original horn to sound.

## Patentansprüche

1. Drahtloses Hupenrelais-Fahrzeugdiebstahlschutzsystem, umfassen:
ein Hupenrelaisgehäuse (1), das im Innern mit einem Leistungeingang und einem Spannungsregelschaltkreis (11) zum Versorgen sämtlicher Schaltkreise in dem Hupenreiaisgehause (1) mit einer Arbeitsspannung versehen ist; einen Funiktransceiverschalltkreis (12) zum Empfangen eines drahtlosen Signals und Verstärken und Umwandeln des empfangenen Signals in ein digitales Signal; einen CPU (13) - Dekopier- und Steuerschaltkreis zum Dekodieren des digitalen Signals und Bereitstellen eines Steuersignals;
ein Set von Spannungsversorgungskabel (4), von denen ein positiver Anschluss in der Form eines Sicherungssteckers (45) vorliegt; und
eine drahtlose Fernsteuerung (5) zum ferngesteuerten Ein- und Ausschalten sämtlicher Schaltkreise in dem Hupenrelaisgehäuse;
wobei das Fahrzeugdiebstahlschutzsystem **dadurch gekennzeichnet ist, dass** es ferner umfasst einen Hupenrelaistreiberschaltkreis (14) zum Verstärken des Steuersignals, um ein Relais anzutreiben, der ebenso in dem Hupenrelaisgehäuse (1) vorgesehen ist, so dass das Relais betätigt wird, um die Originalhupe ertönen zu lassen, einen Diebstahlschutzsensor (2), der elektrisch mit dem CPU Dekodier- und Steuert schaltkreis verbunden ist zum Erfassen eines Diebstahlverhaltens; und ein Set von Eingangs-/Ausgangs- (I/O) Kontakten (3), die Anschlüsse aufweisen, die gleich denjenigen sind, die an einem Originalhupenrelais vorgesehen sind.

2. Drahtloses Hupenrelais-Fahrzeugdiebstahlschutzsystem, umfassend:
ein Hupenrelaisgehäuse (1), das im Innern mit einem Leistungeingang und einem Spannungsregetschaitkreis (11) zum Versorgen sämtlicher Schaltkreise in dem Hupenreiaisgehause (1) mit einer Arbeitsspannung versehen ist; einen Funktransceiverschaltkreis (12) zum Empfangen eines drahtlosen Signals und Verstärken und Umwandeln des empfangenen Signals in ein digitales Signal; einen CPU (13) - Dekopier- und Steuerschaltkreis zum Dekodieren des digitalen Signals und Bereitstellen eines Steuersignals;
einen drahtlosen Diebstahlschutzsensor (25), der extern drahtlos mit dem Hupenrelaisgehäuse (1) verbunden ist und im Innern mit einem Diebstahlschutzsensor (25) und einem Übertragungsschaltkreis zum Erfassen eines Diebstahlverhaltens versehen ist;
ein Set von Spannungsversorgungskabel, von denen ein positives Anschluss in der Form eines Sicherungssteckers vorliegt; und
eine drahtlose Fernsteuerung (5) zum ferngesteuerten Ein- und Ausschalten sämtlicher Schaltkreise in dem Hupenrelaisgehäuse;
wobei das Fahrzeugdiebstahlschutzsystem **dadurch gekennzeichnet ist, dass** es ferner umfasst einen Hupenrelaistreiberschaltkreis (14) zum Verstärken des Steuersignals, um ein Relais anzutreiben, der ebenso in dem Hupenrelaisgehäuse (1) vorgesehen ist, so dass das Relais betätigt wird, um die Originalhupe ertönen zu lassen; und ein Set von Eingangs-/Ausgangs- (I/O) Kontakten, die Abschlüsse aufweisen, die gleich denjenigen sind, die an einem Originalhupenrelais vorgesehen sind.

3. Drahtloses Hupenrelais-Fahrzeugdiebstahlschutzsystem nach Anspruch 1, oder 2, wobei das Hupenrelaisgehäuse (1) eine Größe aufweiset, die identisch zu der des Originalhupenrelais ist und gelegentlich als Originalhupenrelais; und wobei das Set von Spannungsversorgungskabel ein negatives Spannungsversorgungskabel (41), das mit der Karosserie verschraubt ist, und ein positives Spannungsversorgungskabel (42), das einen damit verbundenen Sicherungssockelverbinder aufweist, umfasst, und wobei der Sicherungssockelverbinder zum Einstecken in einen originalen Positivspannungssicherungssockel und zum Aufnehmen einer Sicherung darin ausgebildet ist.

4. Drahtloses Hupenrelais-Fahrzeugdiebstahlschutzsystem nach Anspruch 2, wobei der externe drahtlose Diebstahlschutzsensor eine eingebaute wiederaufladbare Batterie (26) umfasst, und wobei ein Zigarettenanzünderanschluss (27) mit der wiederaufladbaren Batterie (26) verbunden ist und zum Einstecken in eine originale Zigarettenanzünderaufnahme ausgebildet ist, um die wiederaufladbare Batterie (26) zu laden.

5. Drahtloses Hupenrelais-Fahrzeugdiebstahlschutzsystem nach Anspruch 2, wobei der externe drahtlose Diebstahischutzsensor (25) mit einem Set von Spannungsversorgungskabel zum Verbinden mit einer Versorgungsspannung eines Fahrzeuges versehen ist.

6. Drahtloses Hupenrelais-Fahrzeugdiebstahlschutzsystem nach Anspruch 1 oder 2, wobei das Diebstahlschutzsystem als ein drahtloser Hupentreiber für eine andere Diebstahischutzvorrichtung dienen kann, um ein Diebstahlschutzauslösesignal von der anderen Diebstahlschutzvorrichtung zu empfangen und dadurch eine Originalhupe ertönen zu lassen.

## Revendications

1. Système antivol de voiture de type à relais d'avertisseur sans fil, comprenant:
un logement de relais d'avertisseur (1) intérieurement doté d'une entrée électrique et d'un circuit régulateur de tension (11) pour fournir une puissance de travail à tous les circuits dans ledit logement de relais d'avertisseur (1) ; un circuit émetteur récepteur radio (12) pour recevoir un signal sans fil, et amplifier et convertir le signal reçu en une signal numérique ; une DC (13) décodant et commandant le circuit pour décoder ledit signal numérique et fournir un signal de commande ;
un ensemble de câbles électriques (4), dont une borne positive est sous la forme d'une prise de fusible (45) ; et
une commande à distance sans fil (5) pour commander à distance la marche et l'arrêt de tous lesdits circuits dans ledit logement de relais d'avertisseur ;
le système antivol du véhicule étant **caractérisé en ce qu'**il comprend en outre
un circuit de commande de relais d'avertisseur (14) pour amplifier ledit signal de commande pour entraîner un relais, qui est également ménagé dans ledit logement de relais d'avertisseur (1), de sorte que ledit relais soit actionné pour commander la sonnerie de l'avertisseur original ;
un capteur antivol (2) électriquement raccordé audit circuit de décodage et de commande de l'UC pour détecter tout comportement de vol ; et
un ensemble de contacts d'entrée/sortie (I/O) (3) ayant des bornes identiques à celles fournies sur un relais d'avertisseur original.

2. Système antivol de voiture de type à relais d'avertisseur sans fil comprenant :
un logement de relais d'avertisseur (1) intérieurement doté d'une entrée électrique et d'un circuit régulateur de tension (11) pour fournir une puissance de travail à tous les circuits dans ledit logement de relais d'avertisseur ; un circuit émetteur récepteur radio (12) pour recevoir un signal sans fil, et amplifier et convertir le signal reçu en un signal numérique ; une UC (13) décodant et commandant le circuit pour décoder ledit signal numérique et fournir un signal de commande ;
un capteur antivol sans fil (25) extérieurement raccordé sans fil audit logement de relais d'avertisseur (1) et intérieurement doté d'un capteur antivol (25) et d'un circuit de transmission pour détecter n'importe quel comportement de vol ;
un ensemble de câbles électriques, dont une borne positive est sous la forme d'une prise de fusible ; et
une commande à distance sans fil 1 (5) pour commander à distance la marche et l'arrêt de tous lesdits circuits dans ledit logement de relais d'avertisseur ;
ledit système antivol du véhicule étant **caractérisé en ce qu'**il comprend en outre
un circuit de commande de relais d'avertisseur (14) pour amplifier ledit signal de commande, afin d'entraîner un relais, qui est également fourni dans ledit logement de relais d'avertisseur (1), de sorte que ledit relais soit actionné pour faire sonner ledit avertisseur original ; et
un ensemble de contacts d'entrée/sortie (I/O) ayant des bornes identiques à celles fournies sur un relais d'avertisseur original.

3. Système antivol de voiture de type à relais d'avertisseur sans fil selon la revendication 1 ou 2, dans lequel ledit logement de relais d'avertisseur (1) a une taille identique à celle du relais d'avertisseur original (15) et parfois comme le relais d'avertisseur original ; et dans lequel ledit ensemble de câbles électriques comprend un câble électrique négatif (41) qui est visse sur la carrosserie du véhicule, et un câble électrique positif (42) auquel est raccordé un connecteur de douille de fusible, et ledit connecteur de douille de fusible est adapté pour s'insérer dans une douille de fusible à tension positive originale et recevoir un fusible à l'intérieur.

4. Système antivol de voiture de type à relais d'avertisseur sans fil selon la revendication 2, dans lequel ledit capteur antivol sans fil externe comprend une batterie rechargeable intégrée (26) et une borne d'allume-cigares (27) raccordée à ladite batterie rechargeable (26) et adaptée pour s'insérer dans une douille d'allume-cigares originale, afin de charger ladite batterie rechargeable (26).

5. Système antivol de voiture de type à relais d'avertisseur sans fil selon la revendication 2, dans lequel lendit capteur antivol sans fil externe (25) est doté d'un ensemble de câbles électriques à relier à une alimentation électrique sur une voiture.

6. Système antivol de voiture de type à relais d'avertisseur sans fil selon la revendication 1 ou 2, dans lequel ledit système antivol peut servir de commande d'avertisseur sans fil d'un autre dispositif antivol, pour recevoir un signal de déclenchement d'antivol dudit autre dispositif antivol et commander ainsi la sonnerie d'un avertisseur original.
